# EUROPEAN PATENT SPECIFICATION

(11) **EP 1 182 236 B1**
(45) Date of publication and mention of the grant of the patent: **13.04.2005**
(21) Application number: 01118839.8
(22) Date of filing: 13.08.2001
(51) Int. Cl.: C09D 7/12, C08F 220/34

(54) **Vinyl resin additive comprising urethane functionality**
Vinylharzzusatzmittel mit Urethanfunktionalität
Résine vinylique à fonctionnalité uréthane

(30) Priority: 25.08.2000 JP 2000255720
(43) Date of publication of application: 27.02.2002
(73) Proprietor: Kusumoto Chemicals, Ltd., Chiyoda-ku, Tokyo (JP)
(72) Inventor: Uehara, Takao, Kawasaki-shi, Kanagawa-ken (JP); Yamazaki, Jun, Koshigaya-shi, Saitama-ken (JP); Ohira, Kiyomasa, Soka-shi, Saitama-ken (JP); Kawahito, Shigehiro, Soka-shi, Saitama-ken (JP)
(74) Representative: Albrecht, Thomas, Dr.

(56) References cited:
- EP-A- 0 350 414
- EP-A- 0 610 534
- EP-A- 0 694 564
- WO-A-93/03070
- JP-A- 10 158 336
- DATABASE WPI Section Ch, Week 199106 Derwent Publications Ltd., London, GB; Class A60, AN 1991-040123 XP002183803 & JP 02 306955 A (SHOWA DENKO KK), 20 December 1990 (1990-12-20)

## Description

### [Technical field to which the invention belongs]

This invention relates to additives for paints and inks. The additives of the present invention can impart, when added to paints or inks, to the paint-coated or ink-printed surfaces, defoaming and anti-popping property or flow-and-leveling property. The additives of the invention furthermore have a property to prevent whitening phenomenon of painted surfaces and, therefore, is particularly useful as additives for clear paints for which transparency is the most important requirement. Whitening phenomenon of painted surfaces refers to a phenomenon of white blooming or turbidity caused in painted surfaces, due to infiltration of water thereinto. Hereinafter the property or ability to prevent this phenomenon is referred to as anti-whitening property. This anti-whitening property is evaluated by visual examination of extent of whitening caused after immersion of dry painted films in warm water.

### [Prior art]

Paints are generally blended with defoamers (defoaming and anti-popping agent) for removing foams which are entrained during paint application, or with flow-and-leveling agents for improving wettability of painting objects with paints and assisting level painting. When the defoamers and flow-and-leveling agents (which may hereafter be collectively referred to as surface control agents) are blended with paint, they remain in cured clear paint film in the form of particles. Some of the new curing type thermosetting or baking clear systems in which no melamine resin is used as the curing agent, which have recently appeared in the market as a countermeasure to acid precipitation, exhibit the whitening phenomenon due to the presence of surface control agent particles. Examples of such baking clear systems include glycidyl group-containing acrylic resin/acid anhydride-curing type clear paint, high Tg system and high solid clear system using low molecular weight polymers.

### [The problem to be solved by the invention]

Generally a defoamer and anti-popping agent is blended in paint before the latter's application to an object, to prevent such phenomena that the foams which were entrained during the paint application remain on the painted surface to degrade appearance of the painted film or that pinholes caused by such foams impair protection performance of the painted object. Also for preventing uneven painting or ruptures in painted film caused by foreign matters present on the painted object, as well as for assisting level and beautiful finish of the painted surface, flow-and-leveling agent is blended in paint. These are same with the case of printing ink.

Whereas, when conventional surface control agents are blended in new curing type paints using no melamine resin as curing agent, which recently appeared in the market as a countermeasure to acid precipitation on automobiles, the following phenomena are occasionally observed.

In cured films of such new curing type paints, those blended surface control agents remain as fine particles. In consequence, when water penetrates into the interfaces between the surface control agent particles and the paint film, bubbles are formed in the surface control agent particles after the water is removed from the paint film, to impart the paint film white, turbid appearance. This whitening phenomenon is apt to impair appearance of the paints finish. On the other hand, reduction in the blended amount of surface control agents to avoid deterioration in clarity of the paint film often results in unsatisfactory exhibition of the primary functions of the surface control agents.

Accordingly, therefore, the object of the present invention is to provide novel surface control agents for paints and inks, in particular, such surface control agents which do not cause whitening phenomenon and hence do not impair clarity of paint film, when they are blended in paints using no melamine resin as curing agent.

### [Means to solve the problem]

We have engaged in extensive studies to discover that copolymers obtained by reacting reactive monomers used in conventional surface control agents with reactive monomers having isocyanate groups or those having groups derived from isocyanate groups can prevent whitening phenomenon without impairing the effects of the original surface control agents, and hence are useful as additives for, in particular, clear paint.

Thus, according to the present invention, a defoaming and anti-popping agent or flow-and-leveling agent for paints and inks is provided, which is characterized by comprising a copolymer obtained through copolymerization of 2-50% by weight of a reactive monomer having isocyanate group or an isocyanate-derived group with 98-50% by weight of other monomer or polymer which is reactable with said reactive monomer.

When the ratio of said monomer having isocyanate group or an isocyanate-derived group in the copolymer according to the invention is less than 2% by weight, the intended effect for preventing whitening phenomenon cannot be satisfactorily accomplished. On the other hand, when the ratio exceeds 50% by weight, the effects as a surface control agent are not fully exhibited or paint film properties are adversely affected.

Examples of reactive monomers having isocyanate groups include 2-isocyanatoethyl methacrylate, 2-isocyanatoethyl acrylate and 3-isopropenyl-α,α-dimethylbenzyl isocyanate.

The reactive monomers having isocyanate-derived groups are 2-(0-[1'-methylpropylideneamino]carboxyamino)ethyl methacrylate and 2-(0-[1'-methylpropylideneamino]carboxyamino)-ethyl acrylate.

As other monomers or polymers reactable with reactive monomers having isocyanate groups or isocyanate-derived groups, for example, alkyl esters of acrylic acid such as ethyl acrylate, butyl acrylate, 2-ethylhexyl acrylate and lauryl acrylate; alkyl esters of methacrylic acid such as ethyl methacrylate, butyl methacrylate, 2-ethylhexyl methacrylate, lauryl methacrylate, hexadecyl methacrylate and octadecyl methacrylate; alkyl vinyl ethers such as ethyl vinyl ether, propyl vinyl ether, butyl vinyl ether, 2-ethylhexyl vinyl ether, lauryl vinyl ether and octadecyl vinyl ether; reactive silicone having methacryloyloxy groups (Silaplane ™FM-0711 marketed by Chisso Corporation, AK-5 and AK-30 marketed by Toagosei Co., Ltd.); reactive acrylic polymers which are normally referred to as macromonomers (Diamac Series marketed by Mitsubishi Chemical Corporation and A-Series marketed by Toagosei Co., Ltd.); and polymers having reactive groups such as butadiene polymers can be named. Besides these, there are many kinds of monomers and polymers which are useful as starting materials of surface control agents, all of which are utilizable so long as they are copolymerizable with reactive monomers having isocyanate groups or isocyanate-derived groups.

Synthesis of a copolymer from above reactive monomers can be performed following radical polymerization process using peroxide or azo compound, cationic polymerization process using acid catalyst, or anionic polymerization process using alkali metal catalyst. The present invention concerns development of utility of the copolymers, and is in no way limited by their method of synthesis.

The surface control agents according to the present invention are usable with particular effectiveness for clear paints for which transparency of the finish is of predominant importance, e.g., clear top coat paint for automobiles in which resistance to whitening is a significant factor, and precoat metal (PCM) paint.

The surface control agents according to the present invention can be added to paints and inks either during the process of preparing, or after the preparation, of the paints and inks.

The use rate of a surface control agent according to the invention is dependent on various factors such as nature of the paint or ink, conditions of use of the paint or ink, painting conditions of the paint or printing conditions of the ink and the like and hence no certain limits can be provided. Whereas, it is generally used within a range of 0.001 to 5.0%, preferably 0.01 to 2.0%, as converted to solid, based on the weight of the paint or ink. In case of its addition to paint, it may be blended in a greater amount than that of a conventional surface control agent for paint, because the former is less tended to cause whitening phenomenon.

### [Effects of the invention]

The surface control agent for paint or ink according to the present invention is characterized by comprising a copolymer containing isocyanate groups or isocyanate-derived groups, and it not only imparts flow-and-leveling property or defoaming and anti-popping property to painted or printed surface but also prevents the phenomenon of paint film appearing white and turbid when it is added to, in particular, paint, even in the presence of particles of the surface control agent in the cured paint film.

### [Examples]

Hereinafter the invention is explained in further details, referring to Examples in which parts and percentages are by weight.

### Production Example 1 of a defoaming agent

A 1000 ml-reaction vessel equipped with a stirrer, reflux condenser, dropping funnel, thermometer and gaseous nitrogen inlet port was charged with 100 parts of xylene, which was heated to 100°C under introduction of gaseous nitrogen. Thereafter the following solution (a-1) was dropped into said xylene at a constant rate through the dropping funnel, consuming 90 minutes.

### Solution (a-1)

| | |
|---|---|
| Octadecyl methacrylate | 285 parts |
| 2-Isocyanatoethyl methacrylate | 15 parts |
| Xylene | 100 parts |
| t-Butylperoxy-2-ethyl hexanoate | 5 parts |

An hour after completion of the dropwise addition of the solution (a-1), 1.5 parts of the t-butylperoxy-2-ethyl hexanoate was added to the reaction system, which was allowed to react for subsequent 3 hours while its temperature was maintained at 100°C. After termination of the reaction, the solid content was adjusted to 30% using xylene, and a defoaming agent [DG-1] was obtained. So synthesized polymer had a weight-average molecular weight of 17,000.

### Production Example 2 of a defoaming agent

A defoaming agent was prepared in the identical manner with above Production Example 1, except that the following solution (a-2) was added dropwise in place of the solution (a-1) used in Production Example 1.

### Solution (a-2)

| | |
|---|---|
| Hexadecyl methacrylate | 190 parts |
| Lauryl vinyl ether | 80 parts |
| 2-(0-[1'-methylpropylideneamino]-carboxyamino)ethyl methacrylate | 30 parts |
| Xylene | 100 parts |
| t-Butylperoxy-2-ethyl hexanoate | 6 parts |

After termination of the reaction, the solid content of the reaction product was adjusted to 30% using xylene, and a defoaming agent [DG-2] was obtained. So synthesized polymer had a weight-average molecular weight of 25,000.

### Production Example 3 of a defoaming agent

A defoaming agent was prepared in the identical manner with Production Example 1, except that the following solution (a-3) was added dropwise in place of the solution (a-1) used in Production Example 1.

### Solution (a-3)

| | |
|---|---|
| Lauryl methacrylate | 155 parts |
| 2-(0-[1'-methylpropylideneamino]-carboxyamino)ethyl methacrylate | 145 parts |
| Xylene | 100 parts |
| t-Butylperoxy-2-ethyl hexanoate | 15 parts |

After termination of the reaction, the solid content of the reaction product was adjusted to 30% with xylene, and a defoaming agent [DG-3] was obtained. So synthesized polymer had a weight-average molecular weight of 23,000.

### Production Example 1 of a flow-and-leveling agent

A 1000 ml-reaction vessel equipped with a stirrer, reflux condenser, dropping funnel, thermometer and gaseous nitrogen inlet port was charged with 150 parts of toluene which was heated to 110°C and refluxed under introduction of gaseous nitrogen. Then the following solution (b-1) was dropped into the system at a constant rate through the dropping funnel, consuming 2 hours.

### Solution (b-1)

| | |
|---|---|
| 2-Ethylhexyl acrylate | 285 parts |
| 2-Isocyanatoethyl methacrylate | 15 parts |
| Toluene | 100 parts |
| t-Butylperoxy-2-ethyl hexanoate | 9 parts |

An hour after completion of the dropwise addition of the solution (b-1), 3 parts of t-butylperoxy-2-ethylhexanoate was added and the system was allowed to react for subsequent 2 hours while its temperature was maintained at 110°C. After termination of the reaction, the solid content of the reaction product was adjusted to 50% with toluene, and a flow-and-leveling agent [SG-1] was obtained. So synthesized polymer had a number-average molecular weight of 10,000.

### Production Example 2 of a flow-and-leveling agent

The reaction was conducted in the identical manner with above Production Example 1 of the flow-and-leveling agent, except that the following solution (b-2) was used in place of the solution (b-1).

### Solution (b-2)

| | |
|---|---|
| n-Butyl acrylate | 190 parts |
| Isobutyl vinyl ether | 80 parts |
| 2-(0-[1'-methylpropylideneamino]-carboxyamino)ethyl methacrylate | 30 parts |
| Toluene | 100 parts |
| t-Butylperoxy-2-ethyl hexanoate | 15 parts |

After termination of the reaction, the solid content of the reaction product was adjusted to 50% using toluene, and a flow-and-leveling agent [SG-2] was obtained. So synthesized polymer had a number-average molecular weight of 3,500.

### Production Example 3 of a flow-and-leveling agent

The reaction was conducted in the identical manner with the Production Example 1 of the flow-and-leveling agent, except that the following solution (b-3) was used in place of the solution (b-1).

### Solution (b-3)

| | |
|---|---|
| n-Butyl acrylate | 95 parts |
| Methacryloyloxypropylpoly-dimethylsiloxane | 60 parts |
| 2-(0- [1 '-methylpropylideneamino] -carboxyamino)ethyl methacrylate | 145 parts |
| Toluene | 100 parts |
| t-Butylperoxy-2-ethyl hexanoate | 6 parts |

After termination of the reaction, the solid content of the reaction product was adjusted to 50% using toluene, and a flow-and-leveling agent [SG-3] was obtained. So synthesized polymer had a number-average molecular weight of 9,000.

### Comparative Example 1 of producing a defoaming agent

A reaction vessel similar to the one used in Production Example 1 of the defoaming agent was charged with 100 parts of xylene, which was heated to 100°C under introduction of gaseous nitrogen. Then the following solution (c-1) was added dropwise through the dropping funnel at a constant rate, consuming 90 minutes.

### Solution (c-1)

| | |
|---|---|
| Octadecyl methacrylate | 300 parts |
| Xylene | 100 parts |
| t-Butylperoxy-2-ethyl hexanoate | 5 parts |

An hour after completion of the dropwise addition of the solution (c-1), 1.5 parts of t-butylperoxy-2-ethyl hexanoate was added, and the system was allowed to react for subsequent 3 hours while its temperature was maintained at 100°C. After termination of the reaction, the solid content of the reaction product was adjusted to 30% using xylene, and a defoaming agent [DN-1] was obtained. So synthesized polymer had a weight-average molecular weight of 20,000.

### Comparative Example 2 of producing a defoaming agent

The reaction of preceding Comparative Example 1 was repeated except that the following solution (c-2) was used in place of the solution (c-1).

### Solution (c-2)

| | |
|---|---|
| Hexadecyl methacrylate | 210 parts |
| Lauryl vinyl ether | 90 parts |
| Xylene | 100 parts |
| t-Butylperoxy-2-ethyl hexanoate | 15 parts |

After termination of the reaction, the solid content of the reaction product was adjusted to 30% with xylene, to provide a defoaming agent [DN-2]. So synthesized polymer had a weight-average molecular weight of 30,000.

### Comparative Example 3 of producing a defoaming agent

The reaction of Example 1 of producing the defoaming agent was repeated, except that the 2-isocyanatoethyl methacrylate used in the solution (a-1) of said Example 1 was replaced by 2-hydroxylethyl methacrylate (solution (c-3)).

### Solution (c-3)

| | |
|---|---|
| Octadecyl methacrylate | 285 parts |
| 2-Hydroxylethyl methacrylate | 15 parts |
| Xylene | 100 parts |
| t-Butylperoxy-2-ethyl hexanoate | 15 parts |

After termination of the reaction, the solid content of the reaction product was adjusted to 30% with xylene, to provide a defoaming agent [DN-3]. The synthesized polymer had a weight-average molecular weight of 24,000.

### Comparative Example 4 of producing a defoaming agent

The reaction of Example 1 of producing the defoaming agent was repeated, except that the following solution (c-4) was used in place of the solution (a-1) in said Example 1.

### Solution (c-4)

| | |
|---|---|
| Octadecyl methacrylate | 295 parts |
| 2-Isocyanatoethyl methacrylate | 5 parts |
| Xylene | 100 parts |
| t-Butylperoxy-2-ethyl hexanoate | 15 parts |

An hour after completion of the dropwise addition of the solution (c-4), 1.5 parts of the t-butylperoxy-2-ethyl hexanoate was added to the reaction system, which was allowed to react for subsequent 3 hours while its temperature was maintained at 100°C. After termination of the reaction, the solid content of the reaction product was adjusted to 30%, to provide a defoaming agent [DN-4]. The synthesized polymer had a weight-average molecular weight of 19,000.

### Comparative Example 5 of producing a defoaming agent

The reaction of Example 1 of producing the defoaming agent was repeated, except that the following solution (c-5) was used in place of the solution (a-1) in said Example 1.

### Solution (c-5)

| | |
|---|---|
| Octadecyl methacrylate | 140 parts |
| 2-(0-[1'-methylpropylideneamino]-carboxyamino)ethyl methacrylate | 160 parts |
| Xylene | 100 parts |
| t-Butylperoxy-2-ethyl hexanoate | 15 parts |

An hour after completion of the dropwise addition of the solution (c-5), 1.5 parts of the t-butylperoxy-2-ethyl hexanoate was added to the reaction system, which was allowed to react for subsequent 3 hours while its temperature was maintained at 100°C. After termination of the reaction, the solid content of the reaction product was adjusted to 30%, to provide a defoaming agent [DN-5]. The synthesized polymer had a weight-average molecular weight of 22,000.

### Comparative Example 1 of producing a flow-and-leveling agent

A reaction vessel similar to the one used in Production Example 1 of the flow-and-leveling agent was charged with 150 parts of toluene which was subsequently heated to 110°C and refluxed under introduction of gaseous nitrogen. Then the following solution (d-1) was dropped into said system at a constant rate through the dropping funnel, consuming 2 hours.

### Solution (d-1)

| | |
|---|---|
| 2-Ethylhexyl acrylate | 300 parts |
| Toluene | 100 parts |
| t-Butylperoxy-2-ethyl hexanoate | 6 parts |

An hour after completion of the dropwise addition of the solution (d-1), 3 parts of t-butylperoxy-2-ethylhexanoate was added and the system was allowed to react for subsequent 2 hours while its temperature was maintained at 110°C. After termination of the reaction, the solid content of the reaction product was adjusted to 50% with toluene, and a flow-and-leveling agent [SN-1] was obtained. The synthesized polymer had a number-average molecular weight of 9,500.

### Comparative Example 2 of producing a flow-and-leveling agent

The reaction was conducted in the identical manner with above Comparative Example 1 of producing the flow-and-leveling agent, except that the following solution (d-2) was used in place of the solution (d-1).

### Solution (d-2)

| | |
|---|---|
| n-Butyl acrylate | 205 parts |
| Isobutyl vinyl ether | 95 parts |
| Toluene | 100 parts |
| t-Butylperoxy-2-ethyl hexanoate | 15 parts |

After termination of the reaction, the solid content of the reaction product was adjusted to 50% using toluene, and a flow-and-leveling agent [SN-2] was obtained. The synthesized polymer had a number-average molecular weight of 3,000.

### Comparative Example 3 of producing a flow-and-leveling agent

The reaction was conducted in the identical manner with the Production Example 1 of the flow-and-leveling agent, except that the 2-isocyanatoethyl methacrylate in the solution (b-1) used in said Example was replaced by N,N-dimethylacrylamide (the following solution (d-3)).

### Solution (d-3)

| | |
|---|---|
| 2-Ethylhexyl acrylate | 270 parts |
| N,N-dimethylacrylamide | 30 parts |
| Toluene | 100 parts |
| t-Butylperoxy-2-ethyl hexanoate | 6 parts |

After termination of the reaction, solid content of the reaction product was adjusted to 50% using toluene, and a flow-and-leveling agent [SN-3] was obtained. The synthesized polymer had a number-average molecular weight of 10,500.

### Comparative Example 4 of producing a flow-and-leveling agent

The reaction of Production Example 2 of the flow-and-leveling agent was repeated except that the following solution (d-4) was used in place of the solution (b-2).

### Solution (d-4)

| | |
|---|---|
| n-Butyl acrylate | 205 parts |
| Isobutyl vinyl ether | 90 parts |
| 2-(0-[1'-methylpropylideneamino]-carboxyamino)ethyl methacrylate | 5 parts |
| Toluene | 100 parts |
| t-Butylperoxy-2-ethyl hexanoate | 15 parts |

After termination of the reaction, the solid content of the reaction product was adjusted to 50% with toluene, to provide a flow-and-leveling agent [SN-4]. The number-average molecular weight of the synthesized polymer was 3,500.

### Comparative Example 5 of producing a flow-and-leveling agent

The reaction of Production Example 2 of the flow-and-leveling agent was repeated except that the following solution (d-5) was used in place of the solution (b-2).

### Solution (d-5)

| | |
|---|---|
| n-Butyl acrylate | 105 parts |
| Isobutyl vinyl ether | 35 parts |
| 2-(0-[1'-methylpropylideneamino]-carboxyamino)ethyl methacrylate | 160 parts |
| Toluene | 100 parts |
| t-Butylperoxy-2-ethyl hexanoate | 15 parts |

After termination of the reaction, the solid content of the reaction product was adjusted to 50% using toluene, to provide a flow-and-leveling agent [SN-5]. The synthesized polymer had a number-average molecular weight of 4,000.

**TABLE 1**

| Additives formed in Production Examples of the defoaming agents | | | |
|---|---|---|---|
| | Additive | Weight-average molecular weight | Non-volatile component (%) |
| Production Example 1 | DG-1 | 17000 | 30 |
| Production Example 2 | DG-2 | 25000 | 30 |
| Production Example 3 | DG-3 | 23000 | 30 |

**TABLE 2**

| Additives formed in Production Examples of the flow-and-leveling agents | | | |
|---|---|---|---|
| | Additive | Number-average molecular weight | Non-volatile component (%) |
| Production Example 1 | SG-1 | 10000 | 50 |
| Production Example 2 | SG-2 | 3500 | 50 |
| Production Example 3 | SG-3 | 9000 | 50 |

**TABLE 3**

| Additives formed in Comparative Production Examples of defoaming agents | | | |
|---|---|---|---|
| | Additive | Weight-average molecular weight | Non-volatile component (%) |
| Comparative Production Example 1 | DN-1 | 20000 | 30 |
| Comparative Production Example 2 | DN-2 | 30000 | 30 |
| Comparative Production Example 3 | DN-3 | 24000 | 30 |
| Comparative Production Example 3 | DN-4 | 19000 | 30 |
| Comparative Production Example 3 | DN-5 | 22000 | 30 |

**TABLE 4**

| Additives formed in Comparative Production Examples of flow-and-leveling agents | | | |
|---|---|---|---|
| | Additive | Number-average molecular weight | Non-volatile component (%) |
| Comparative Production Example 1 | SN-1 | 9500 | 50 |
| Comparative Production Example 2 | SN-2 | 3000 | 50 |
| Comparative Production Example 3 | SN-3 | 10500 | 50 |
| Comparative Production Example 4 | SN-4 | 3500 | 50 |
| Comparative Production Example 5 | SN-5 | 4000 | 50 |

### Example 1 (Anti-whitening property test of the defoaming agents as added to acid anhydride-curing type clear paint, and defoaming test in melamine resin-cured clear paint)

Anti-whitening property of painted films was conducted with those baked finish type acrylic acid anhydride-curing type clear paints of the compositions as shown in Table 5. The same additives were also added to those melamine resin-cured clear paint compositions of Table 6 and their defoaming and anti-popping test was conducted.

Those starting materials as shown in Table 5 were homogeneously mixed with a dissolver to form an acid anhydride-curing type clear paints. To each of the paints 1% by weight to the clear paint of one of those defoaming agents shown in Tables 1 and 3 was added and dispersed with said dissolver at 2,000 r.p.m. for 2 minutes. Thus formed paint formulation each was applied on a glass plate with a 150 µm-applicator for an anti-whitening property test, and cured by baking in a 200°C oven for 30 minutes. This painted plate was cooled off to room temperature, immersed in 80°C warm water for an hour. The water was then allowed to cool off to 25°C. The painted plate was withdrawn from the water tank, and water drops on the paint film surface were wiped off with dry non-woven fabric, followed by 24 hours' drying at room temperature. The whitening condition of the paint film was visually observed.

The defoaming test was conducted in the following manner. Viscosity of those clear paints shown in Table 6 was adjusted with a diluting solvent to 25 seconds with Ford cup #4, and each of the paints was applied onto a tin plate with an air spray gun at increasing rates so that the dry paint film thickness should vary from 20 µm to 100 µm. The painted film was allowed to stand for 3 minutes after the application, and then baked in a 160°C oven for 20 minutes to be cured.

The test results of the paint films were evaluated as follows. The anti-whitening property of the baked films formed on the glass plates was visually evaluated in five scales from "the best" (5) to the worst (1). The defoaming property was evaluated by measuring thickness of the dry film, in which foams appeared, on the painted surface of said tin plate with a thickness gauge. Furthermore, the whole painted surface was visually observed, and graded in five scales from "the best" (5) showing the least number of foams to "the worst" (1) showing the greatest number of foams. The test results were as shown in Table 7.

**TABLE 5**

| Acid Anhydride-Curing Type Clear Paint Formulations | | |
|---|---|---|
| Starting Material | Amount (parts) | Maker company |
| Finedic A-207S ^{*1)} (50% solution^{*2)} | 68.4 | Dainippon Ink & Chemicals, Inc. |
| Dodecenylsuccinic acid anhydride (50% solution^{*2)} | 31.6 | Wako Pure Chemical Industries, Ltd. |
| DNP-30 (2,4,6-tris(dimethylaminomethyl)phenol) | 1.0 | Wako Pure Chemical Industries, Ltd. |

| | | |
|---|---|---|
| *1) epoxy equivalent 490 g/eq. | | |
| *2) diluting solvent: Solvesso #100/xylene/butyl cellosolve/n-butanol = 4/3/2/1 | | |

**TABLE 6**

| Melamine Resin-Curing Type Clear Paint | | |
|---|---|---|
| Starting Material | Amount (parts) | Maker company |
| Beckosol EZ-3530-80 | 57.9 | Dainippon Ink & Chemicals, Inc. |
| Super Beckamine L-116-70 | 28.4 | Dainippon Ink & Chemicals, Inc. |
| Diluting solvent^{*)} | proper quantity | |

| | | |
|---|---|---|
| *) diluting solvent: Solvesso #100/xylene/butyl cellosolve/n-butanol = 4/3/2/1 | | |

**TABLE 7**

| Test Results | | | | |
|---|---|---|---|---|
| Additive | Added amount (%) | Anti-whitening property | Foamed film thickness (µm) | Number of foams |
| Blank | - | 5 | 20 | 1 |
| DG-1 | 1.0 | 5 | 65 | 3 |
| DG-2 | 1.0 | 5 | 80 | 5 |
| DG-3 | 1.0 | 5 | 50 | 3 |
| DN-1 | 1.0 | 2 | 80 | 5 |
| DN-2 | 1.0 | 1 | 80 | 5 |
| DN-3 | 1.0 | 3 | 40 | 2 |
| DN-4 | 1.0 | 2 | 70 | 4 |
| DN-5 | 1.0 | 5 | 20 | 1 |

### Example 2 (Anti-whitening property test of the flow-and-leveling agents as added to clear powder coating)

The flow-and-leveling agents were added to the acrylic clear powder coating compositions as shown in Table 8, and the anti-whitening property of the baked films was tested.

### [Preparation of master batch]

An acrylic resin (Finedic A-253) was melted at 170°C, in which each one of those flow-and-leveling agents of Tables 2 and 4 was uniformly dispersed to the solid concentration of 10%, with a high speed dissolver. The dispersions were cooled, pulverized with a pin-mill and sieved through a 32 mesh-sieve to provide 10% acrylic resin master batch compositions.

### [Preparation of acrylic powder coating]

Acrylic powder coatings of Table 8, which contained the above master batch compositions, were dry-blended and then melt-kneaded in an extruder maintained at 100-110°C. The kneaded masses were cooled, pulverized in a pin-mill, and sieved through a 150 mesh-sieve to provide white, clear powder coatings.

### [Application of the acrylic powder coatings and evaluation]

Each of above powder coatings was blown onto a glass plate by electrostatic powder coating method, to the cured film thickness of 100 µm, and the anti-whitening property of the films was evaluated. The powder coatings were also blown onto a thermoresistant stainless steel sheet (0.5 x 70 x 100 mm) each, by electrostatic powder coating method, to the cured film thickness of 40 µm. Those coated glass plates and stainless steel sheets were then baked at 160°C for 30 minutes. Evaluation of anti-whitening property was conducted in the same manner with Example 1, and the flow-and-leveling property of the baked films was visually evaluated. The results were as shown in Table 9.

**TABLE 8**

| Acrylic Clear Coating Powder | | |
|---|---|---|
| Starting Material | Amount (parts) | Maker Company |
| Acrylic resin : Finedic A-253 | 75.5 | Dainippon Ink & Chemicals, Inc. |
| Curing agent: Dodecandioic acid | 21 | Wako Pure Chemical Industries, Ltd. |
| Flow-and-leveling agent: acrylic resin master batch | 5 | |

**TABLE 9**

| Flow-and-Leveling Property Test Results of Acrylic Clear Powder Coatings | | | |
|---|---|---|---|
| Additive | Amount (%) | Anti-whitening property | Flow-and-leveling property |
| Blank | ― | 5 | 1 |
| SG-1 | 0.5 | 5 | 4 |
| SG-2 | 0.5 | 5 | 5 |
| SG-3 | 0.5 | 5 | 3 |
| SN-1 | 0.5 | 1 | 4 |
| SN-2 | 0.5 | 3 | 5 |
| SN-3 | 0.5 | 1 | 3 |
| SN-4 | 0.5 | 2 | 4 |
| SN-5 | 0.5 | 5 | 1 |

## Claims

1. Use of a copolymer obtainable by radical, cationic or anionic polymerisation of 2 to 50% by weight of a reactive monomer having isocyanate group or a reactive monomer selected from 2-(0-[1'-methyl-propylideneamino]carboxyamino)ethyl methacrylate and 2-(0-[1'-methylpropylideneamino]carboxyamino)ethyl acrylate with 98 to 50% by weight of other monomer or polymer which is reactable with that reactive monomer as a surface control agent for paint or ink.

2. The use of Claim 1, in which the reactive monomer having isocyanate group is 2-isocyanatoethyl methacrylate, 2-isocyanatoethyl acrylate or 3-isopropenyl-α,α-dimethylbenzyl isocyanate.

3. The use of Claim 1, in which the monomer or polymer reactable with said reactive monomer is an alkyl ester of acrylic acid, alkyl ester of methacrylic acid, alkyl vinyl ether, reactive silicone having methacryloyloxy group, reactive acrylic polymer or butadiene polymer.

## Patentansprüche

1. Verwendung eines Copolymers, das erhältlich ist durch radikalische, kationische oder anionische Polymerisation von 2 bis 50 Gew.-% eines reaktiven Monomers mit Isocyanatgruppe, oder eines reaktiven Monomers, ausgewählt aus 2-(0-[1'-Methylpropylidenamino]carboxyamino)ethylmethacrylat und 2-(0-[1'-Methylpropylidenamino]carboxyamino)ethylacrylat mit 98 bis 50 Gew.-% eines anderen Monomers oder Polymers, das mit dem reaktiven Monomer umsetzbar ist, als Oberflächensteuerungsmittel für Anstrichmittel oder Farben.

2. Verwendung nach Anspruch 1, wobei das reaktive Monomer mit Isocyanatgruppe, 2-Isocyanatoethylmethacrylat, 2-Isocyanatoethylacrylat oder 3-Isopropenyl-α,α-dimethylbenzylisocyanat ist.

3. Verwendung nach Anspruch 1, wobei das mit dem reaktiven Monomer umsetzbare Monomer oder Polymer ein Alkylester von Acrylsäure, ein Alkylester von Methacrylsäure, ein Alkylvinylether, ein reaktives Silikon mit Methacryloyloxygruppe, ein reaktives acrylisches Polymer oder ein Butadienpolymer ist.

## Revendications

1. Utilisation d'un copolymère pouvant être obtenu par polymérisation radicalaire, cationique ou anionique de 2 à 50 % en poids d'un monomère réactif ayant un groupe isocyanate, ou d'un monomère réactif choisi parmi le méthacrylate de 2-(O-[1'-méthyl-propylidène-amino] carboxyamino) éthyle et l'acrylate de 2-(O-[2'-méthyl-propylidène-amino] carboxyamino) éthyle avec 98 à 50 % en poids d'un autre monomère ou polymère qui soit capable de réagir avec ce monomère réactif en tant qu'agent de contrôle de surface pour peinture ou encre.

2. Utilisation selon la revendication 1, dans laquelle le monomère réactif ayant un groupe isocyanate est le méthacrylate de 2-isocyanatoéthyle, l'acrylate de 2-isocyanatoéthyle ou l'isocyanate de 3-isopropényl-α,α-diméthylbenzyle.

3. Utilisation selon la revendication 1, dans laquelle le monomère ou polymère capable de réagir avec ledit monomère réactif est un alkylester d'acide acrylique, un alkylester d'acide méthacrylique, un alkyléther de vinyle, une silicone réactive ayant un groupe méthacryloyloxy, un polymère acrylique réactif ou un polymère de butadiène.
